# EUROPEAN PATENT APPLICATION

(11) **EP 4 375 556 A1**
(43) Date of publication of application: **29.05.2024**
(21) Application number: 22210001.8
(22) Date of filing: 28.11.2022
(51) Int. Cl.: F16L 47/22, C25B 15/08

(54) **TUBING FOR AN ELECTROLYSIS OR HYDROLYSIS CELL**

(71) Applicant: FLUOR TUBING B.V., 3542 CH Utrecht (NL)
(72) Inventor: SOETERBROEK, Alexander J. A., 3735KB BOSCH EN DUIN (NL)
(74) Representative: Farago-Schauer, Peter Andreas

(57) **Abstract**

The present invention relates to a tubing 10, 20 for an electrolysis or hydrolysis cell 2, the tubing 10, 20 being designed to be connected to an inlet or an outlet nozzle 31, 32 of the electrolysis or hydrolysis cell 2, wherein the tubing 10, 20 comprises a first part 11, 21 sized and shaped to be pulled over the external surface of the inlet or outlet nozzle 31, 32 of the electrolysis or hydrolysis cell 2, and wherein at least the first part 11, 21 of the tubing 10, 20 is made of a heat shrinkable material, the heat shrinkable material having a shrink behavior such that a sealing is formed between the first part 11, 21 of the tubing 10, 20 and the inlet or the outlet nozzle 31, 32 of the electrolysis or hydrolysis cell 2 without fastening means at an operating temperature of the electrolysis or hydrolysis cell 2. The present invention further relates to an electrolysis or hydrolysis cell including an inlet and outlet nozzle in combination with the tubing according to the invention, a method for manufacturing a tubing according to the invention and a method for sealing a connection between an inlet or outlet nozzle of an electrolysis or hydrolysis cell and a tubing according to the invention without fastening means.

## Description

The present invention relates to a tubing for an electrolysis or hydrolysis cell, an electrolysis or hydrolysis cell including an inlet and outlet nozzle in combination with the tubing according to the invention, a method for manufacturing a tubing according to the invention and a method for sealing a connection between an inlet or outlet nozzle of an electrolysis or hydrolysis cell and a tubing according to the invention without fastening means.

In the prior art, it is already known that a tubing for electrolysis or hydrolysis cells is connected to inlet and outlet nozzles of said electrolysis or hydrolysis cells. However, the connection of the tubing to the nozzles in the prior art needs to be further reinforced by fastening means like a cuff, a bracket or the like to provide for a sealed and sufficiently fixed connection. This brings about the disadvantage that further components as well as further assembling steps are necessary.

Furthermore, prior art tubing needs furthermore to have a dimensioning such as to be tightly fitted the on a respective inlet and outlet nozzle of the electrolysis or hydrolysis cells for subsequent tight connection by means of the fastening means. In fact, if the tubing is not correctly dimensioned, so as to tightly fit on the inlet and outlet nozzles of the electrolysis or hydrolysis cells, the seal might not be sufficient and/or the tubing might be damaged when the fastening means are tightened.

It is therefore an object of the present invention to at least partially overcome the disadvantages described above.

In particular, it is an object of the present invention to provide an improved tubing for an electrolysis or hydrolysis cell which can be easily fitted to and sealed on the inlets and/or the outlets of an electrolysis or hydrolysis cell without the use of additional tools.

It is a further object of the present invention to provide for an improved tubing for an electrolysis or hydrolysis cell which can be manufactured with more relaxed dimensioning constraints as it is the case in the prior art, in particular with a larger opening facing the inlets and/or inlets of an electrolysis or hydrolysis cell, such that the tubing can be more simply fitted over the inlets and/or the outlets and also removed from the same if need be, for instance for replacement and maintenance purposes.

The above objects and further objects which will become apparent hereinafter are achieved by a tubing having the features of claim 1, an electrolysis or hydrolysis cell including an inlet and outlet nozzle in combination with the tubing according to the invention, a method for manufacturing heat shrinkable tubing material having the features of claim 9 and a method for sealing a connection between an inlet or outlet nozzle of an electrolysis or hydrolysis cell and a tubing having the features of claim 15.

Further advantageous features are set out in the dependent claims.

According to a first aspect of the invention, the objects of the invention are solved by a tubing for an electrolysis or hydrolysis cell, the tubing having a first part being designed to be directly connected to an external surface of an inlet or outlet nozzle of the electrolysis or hydrolysis cell. The first part of the tubing is sized and shaped to be pulled over the external surface of the inlet or outlet nozzle of the electrolysis or hydrolysis cell. Further, at least the first part of the tubing is made of a heat shrinkable material, the heat shrinkable material having a shrink behavior such that a sealing is formed between the first part of the tubing and the inlet or outlet nozzle of the electrolysis or hydrolysis cell without fastening means at an operating temperature of the electrolysis or hydrolysis cell. Advantageously, the first part of the tubing has a larger opening facing the inlet and/or outlet nozzles of the electrolysis or hydrolysis cell, such that the first part of the tubing can be more simply fitted over the inlet and/or the outlet nozzles and also removed from the same if need be, for instance for replacement and maintenance purposes.

A "tubing" may in the context of the invention be understood as a single continuous tube or a system comprising multiple connected tubes wherein the former alternative is preferred. The term "external surface" may in other words designate an outer surface of the inlet or outlet nozzle which faces towards an external environment. A connection to the external surface may be preferred to increase a throughput or flow rate through the inlet or outlet nozzle. The term "heat shrinkable material" may express that the material decreases in diameter when a certain temperature is applied to the material for a sufficient amount of time. Said temperature may vary according to the type of material that is used, for example polyolefin, Fluorinated ethylene propylene (FEP), polyvinyl chloride (PVC) or polytetrafluoroethylene (PTFE). Said sufficient amount of time may express the period of time that is necessary so that the temperature of the tubing in its entirety equals at least said certain temperature. Said certain temperature may be the operating temperature of the electrolysis or hydrolysis cell. The operating temperature may be in a range between 90 and 130 degrees Celsius and may designate a temperature of the electrolysis or hydrolysis cell while it is in operation. Due to the shrinking which is caused by the heat of the electrolysis or hydrolysis cell in operation, the first part of the tubing may enclose the inlet or outlet nozzle and therefore provide for a sealed connection of the first part of the tubing with the inlet or outlet nozzle. According to the invention, this sealing between the first part of the tubing and the inlet or outlet nozzle of the electrolysis or hydrolysis cell alone is already provided in a sufficient manner so that no additional fastening means like a cuff or the like are necessary for the purpose of sealing. In the context of the present invention withstanding a pressure up to maximum pressure in a range of 500 to 900 mbar may be considered as sufficient in terms of sealing.

Further, in the context of the invention, indefinite and definite articles or numerical indications, e.g. "one", "two", etc., are always to be understood as "at least" indications, unless expressly stated otherwise. Furthermore, numerical indications as well as indications of process parameters and/or device parameters are to be understood in the technical sense, i.e. as having the usual tolerances. Also, from the explicit indication of "at least" or the like it must not be concluded that by the simple use of the article or the numerical indication, i.e. without the indication of "at least" or the like, a restriction, e.g. in the sense of "exactly one", is to be implied.

Advantageously, the heat shrinkable material may comprise or be made exclusively of polytetrafluoroethylene (PTFE). The whole tubing may be advantageously made of the heat shrinkable material.

While PTFE is preferred, any different material may be used that serves the purpose of the invention, i.e., to provide a sealing between the first part of the tubing and the inlet or outlet nozzle of the electrolysis or hydrolysis cell in a sufficient manner so that no additional fastening means like a cuff or the like are necessary. Alternative materials are for example polyolefin, Fluorinated ethylene propylene (FEP) or polyvinyl chloride (PVC).

In an example, the first part of the tubing or the whole tubing can be preferably made of PTFE which may be stretched during its manufacturing in a gelation phase thereof, preferably at a temperature in a range between 250 and 400 degrees Celsius, more preferably in a range between 300 and 350 degrees Celsius, and most preferably at a temperature of about 330 degrees Celsius.

The gelation phase may in the context of the invention be a phase that is present above a temperature in which a gelation point lies, which in turn may designate an abrupt change in viscosity.

According to a preferred aspect of the invention, the tubing further comprises a second part adjacent to the first part, wherein the first part of the tubing is intended for connecting directly to the external surface of the inlet or outlet nozzle of the electrolysis or hydrolysis cell, wherein the first part has a larger cross section than the second part. By the term "directly" it is intended that no additional elements are interposed between the first part of the tubing and the nozzles.

A transition between the first part and the second part may be provided abrupt or gradual. The first and/or second part may have the same cross section across an entire length of the first and/or second part. The first part having a larger cross section than the second part may express that a part of the first part has a larger cross section than the largest cross section of the second part or it may express that any part of the first part has a larger cross section than the largest cross section of the second part.

It is conceivable that the first part is bell-shaped, wherein a cross section of the bell increases in an axial direction of the tubing towards an outer end of the tubing directly connecting to the external surface of the inlet or outlet nozzle of the electrolysis or hydrolysis cell.

In an alternative, it may be provided that the cross section of the first part only increases in a section of the first part in an axial direction of the tubing towards an outer end of the first part.

It may have an advantage if the cross section of the tubing is at least in part circular cylindrical. It may be preferable if the tubing as a whole is circular cylindrical. Alternatively, shapes like elliptical or polygonal are conceivable for the cross section of the tubing.

In a possible embodiment, the second part of the tubing is at least in part corrugated. The second part being corrugated may provide the technical effect of an increased flexibility. It may also be provided that the second part of the tubing as a whole is corrugated to further increase flexibility.

It may be provided that the tubing further includes a third part adjacent to the second part at the end of the second part which is remote from the first part, wherein the third part has a larger cross section than the second part.

It is conceivable that the third part is similarly shaped as the first part of the tubing, but it may also be shaped differently to allow a connection to a respective differently shaped end.

According to a second aspect of the invention the objects thereof are solved by an electrolysis or hydrolysis cell including an inlet and outlet nozzle in combination with the tubing according to the invention, wherein the first part of the tubing is connected to the inlet and/or outlet nozzle of the electrolysis or hydrolysis cell.

According to a third aspect of the invention the objects thereof are solved by a method for manufacturing a heat shrinkable tubing part or a whole tubing, wherein preferably the tubing part is the aforementioned first tubing part for connection to the inlet and/or outlet of the nozzle of the electrolysis or hydrolysis cell or the whole tubing. The method comprises providing a raw material for the tubing part or the whole tubing, followed by the step of extruding the raw material to form the tubing part or the whole tubing. The step of extrusion is followed by heating the extruded tubing part or the whole tubing at or above the gelation temperature thereof. The heating step is followed by a stretching step of the tubing part or the whole tubing. Finally, the stretched tubing part or the whole tubing is cooled down.

Preferably, the raw material comprises or is exclusively comprised of polytetrafluoroethylene (PTFE).

The stretching step may be preferably carried out by pressure, preferably by blow molding and/or preferably at a pressure in the range of 5 to 20 bar and more preferably in the range of 5 bar to 15 bar. The cooling down step may also be advantageously performed under pressure, preferably at the same pressure as the pressure in the stretching step.

The heating step may be performed at a temperature in a range between 250 and 400 degrees Celsius, preferably in a range between 300 and 350 degrees Celsius, and more preferably at a temperature of about 330 or about 324 degrees Celsius.

The cooling down may be carried out such that the tubing part or the whole tubing reaches room temperature. The cooling down step may be carried out actively by using cooling means or passively by simply allowing the tube part or whole tube to reach room temperature.

Advantageously, the extrusion step may be followed by a sintering step which is further followed by the heating step.

If the stretching and cooling of the tubing part or the whole tubing are carried out in a blow mold, the following steps may be performed in a blow mold:
bringing the heated tubing part or the whole tubing into the blow mold,
closing the blow mold around the tubing part or the whole tubing,
applying a pressure in a range between 5 and 20 bar, preferably in a range between 5 and 15 bar, inside the tubing part or the whole tubing so that the same expands,
cooling the tubing part or the whole tubing down to room temperature under the pressure,
opening the blow mold and releasing the expanded tubing part or the whole tubing.

According to a fourth aspect of the invention, the object is solved by a method for sealing a connection between an inlet or outlet nozzle of an electrolysis or hydrolysis cell and the first part of the tubing according to the invention without fastening means. The method includes sliding the first part of the tubing on the inlet and/or outlet nozzle of the electrolysis or hydrolysis cell, shrinking the first part of the tubing on the inlet and/or outlet nozzle of the electrolysis or hydrolysis cell so as to form a sealing between the first part of the tubing and the inlet and/or outlet nozzle of the electrolysis or hydrolysis cell at an operating temperature of the electrolysis or hydrolysis cell.

The above and other features of the invention will become apparent from the following description of preferred embodiments, given by way of non-limiting example with reference to the accompanying drawings, wherein:
Fig. 1 is an overall perspective view of an embodiment of the tubing of the present invention devised as an inlet tubing connectable to an inlet of an electrolysis or hydrolysis cell, where the inlet tubing is in a non-connected state;
Fig. 2 is an enlarged view of the overall perspective view of Fig. 1;
Fig. 3 is a lateral view of the inlet tubing of Fig. 1 in a state plugged over the inlet of the electrolysis or hydrolysis cell but not heat shrunk;
Fig. 4 is a view of the inlet tubing of Fig. 3 represented in cross-section;
Fig. 5 is an enlarged view of Fig. 4 showing the connection section of the inlet tubing and the inlet of the electrolysis or hydrolysis cell;
Fig. 6 is corresponding to the view of Fig. 5 wherein the inlet tubing is plugged over the inlet of the electrolysis or hydrolysis cell and heat shrunk over the same;
Fig. 7 is an overall perspective view of an embodiment of the tubing of the present invention devised as an outlet tubing connectable to an outlet of an electrolysis or hydrolysis cell, where the outlet tubing is pulled over the outlet of the electrolysis or hydrolysis cell but not yet heat shrunk;
Fig. 8 is an enlarged view of the overall perspective view of Fig. 7;
Fig. 9 is a view of the inlet tubing of Fig. 8 represented in cross-section;
Fig. 10 is corresponding to the view of Fig. 9, wherein the outlet tubing is plugged over the outlet of the electrolysis or hydrolysis cell and heat shrunk over the same;
Fig. 11 is a general view showing a possible embodiment of an electrolysis or hydrolysis cell with the inlet wherein the inlet and outlet tubing according to the present invention is connected to the respective inlet and outlet nozzles of the electrolysis or hydrolysis cell; and
Fig. 12 is an enlarged of a detail of Fig. 11.

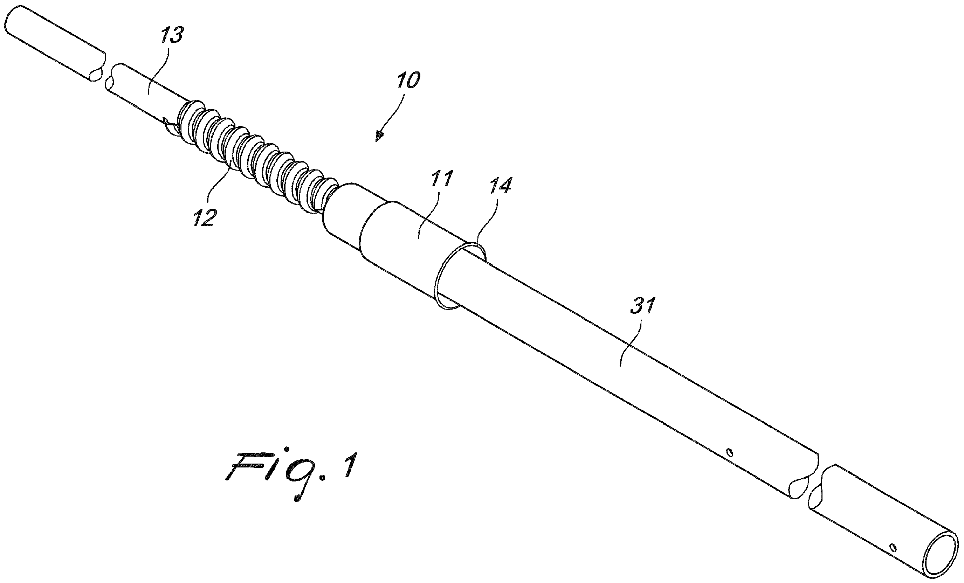

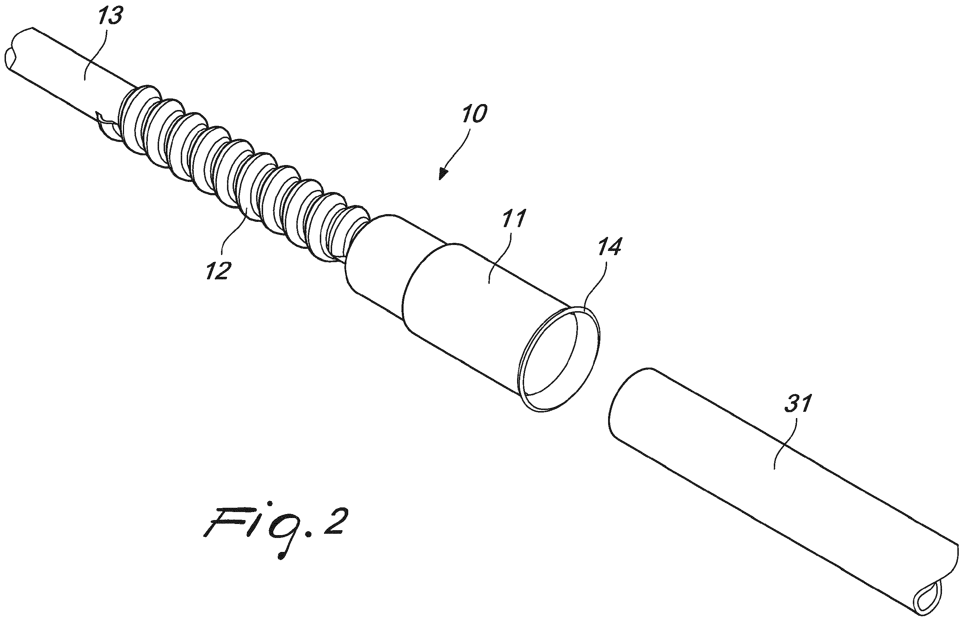

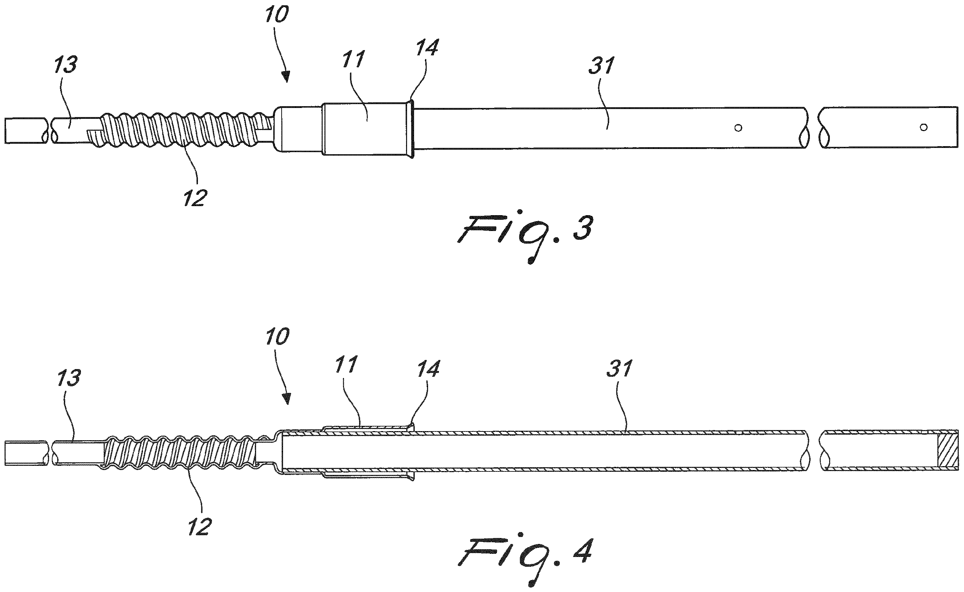

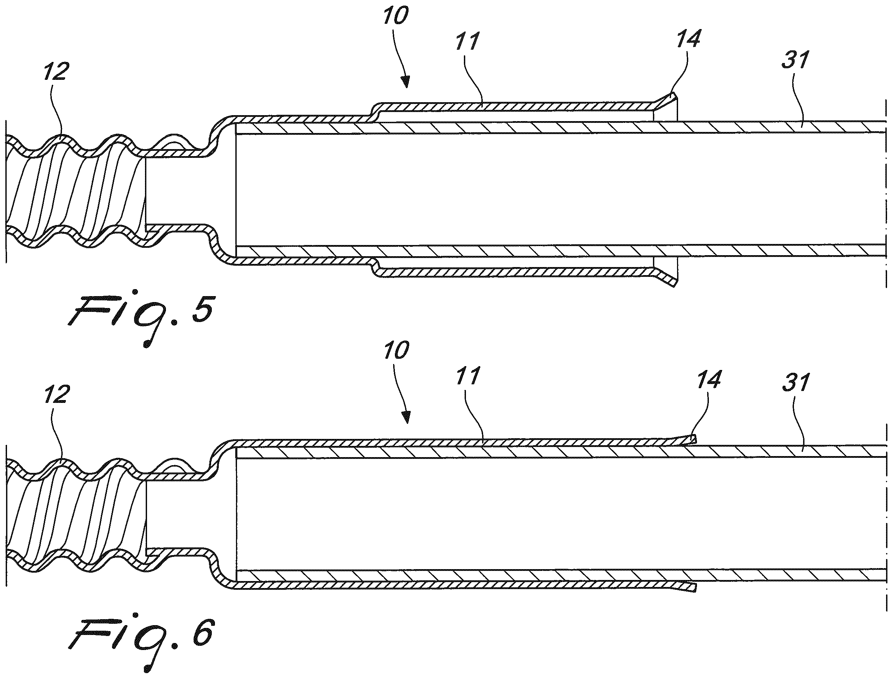

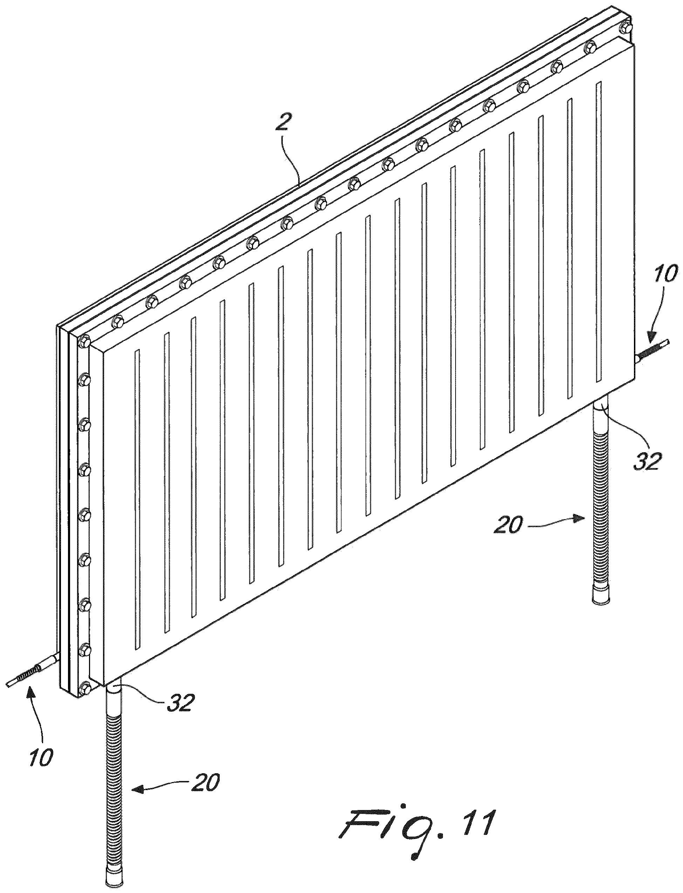

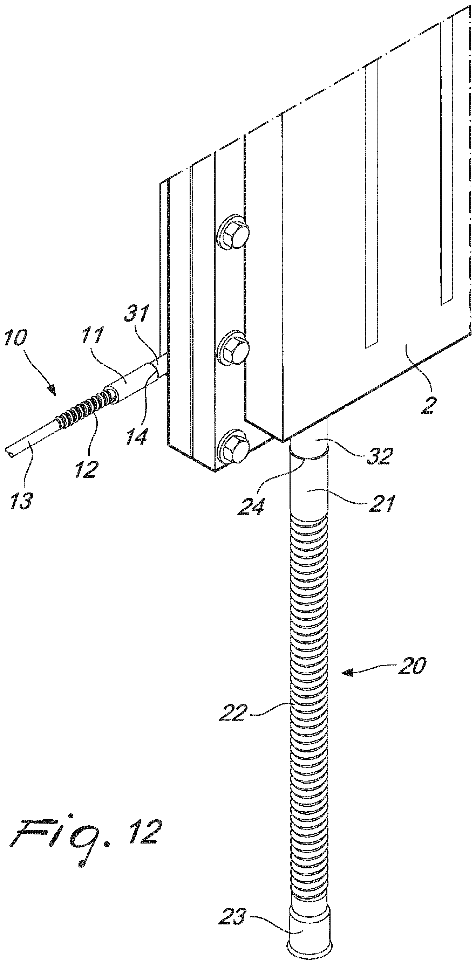

With reference to figures 1 to 6 and 11 to 12 there is described an embodiment of the tubing of the present invention embodied as a heat shrinkable inlet tubing 10.

The inlet tubing 10 comprises a first part 11 and a second part 12 adjacent to the first part 11, wherein the first part 11 is intended for connecting to the external surface of an inlet nozzle 31 of the electrolysis or hydrolysis cell 2. At least the first part 11 of the inlet tubing 10 is made of a heat shrinkable material. However, according to the invention, also the complete inlet tubing 10 can be made of a heat shrinkable material. Preferably, the second part 12 of the inlet tubing 10 is at least in part corrugated.

The electrolysis or hydrolysis cell 2 is of a conventional type and it can be embodied as the electrolysis cell described in EP 3 688 206 B1, the teachings of which are herewith incorporated by reference. Nevertheless, the person skilled in the art will appreciate that any conventional electrolysis or hydrolysis cell is intended in the context of the present invention, as long as the same have inlet and outlet nozzles dimensions to cooperate with the tubing of the present invention. In addition, the person skilled in the art will appreciate that the inlet and outlet nozzles are devised so as to withstand the electrolyte flowing into and the discharge fluids flowing from the cells. Furthermore, preferably, the inlet and outlet nozzles of the cells are not heat shrinkable and maintain substantially the cross-section thereof with the change of temperature. Preferred materials for the inlet and outlet nozzles of the electrolysis or hydrolysis cell are plastic, glass or metal.

According to a preferred aspect of the invention, the first part 11 of the inlet tubing 10 has a larger cross section than the second part 12 thereof.

Further preferably, the first part 11 of the inlet tubing 10 is bell-shaped, wherein a cross section of the bell increases in an axial direction of the inlet tubing 10 towards an outer end 14 of the inlet tubing 10 directly connecting to the external surface of the inlet nozzle 31 of the electrolysis or hydrolysis cell 2.

Advantageously, in terms of manufacturing, the cross section of the inlet tubing 10 is at least in part circular cylindrical.

Optionally, the inlet tubing 10 further includes a third part 13 adjacent to the second part 12 at the end of the second part 12 which is remote from the first part 11, wherein advantageously the third part 13 has a larger cross section than the second part 12. The third part 13 may also have a smaller cross section than the second part 12 depending on the application of the inlet tubing 10. The third part 13 may be corrugated.

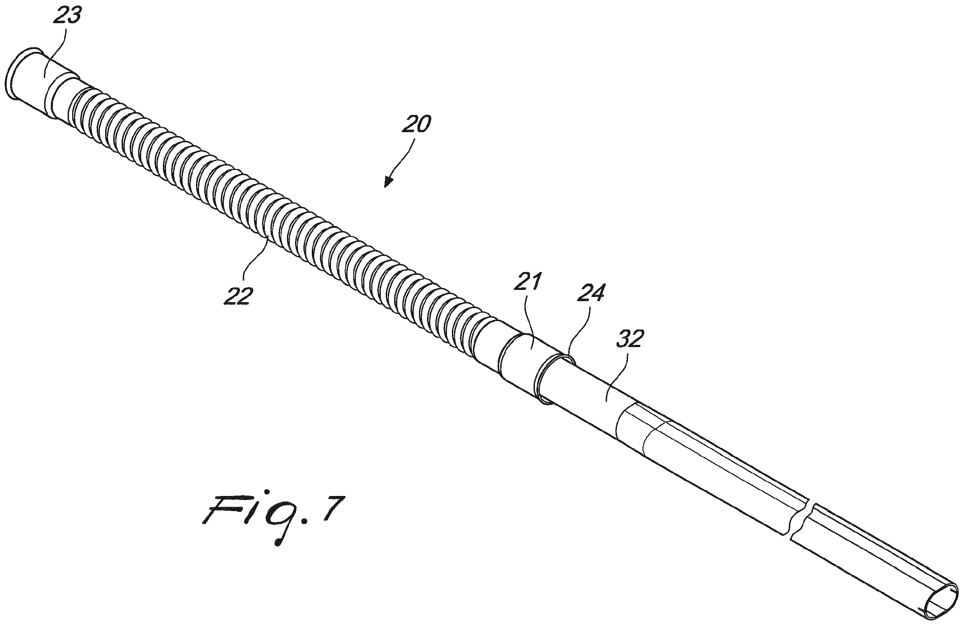

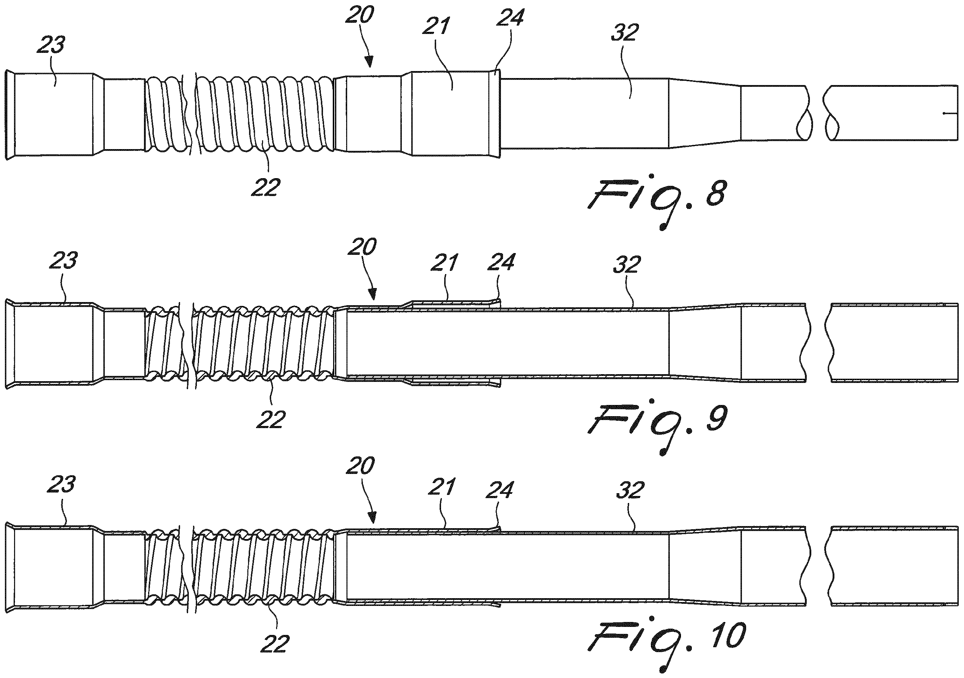

With reference to figures 7 to 12 there is described an embodiment of the tubing of the present invention embodied as a heat shrinkable outlet tubing 20.

The outlet tubing 20 comprises a first part 21 and a second part 22 adjacent to the first part 21, wherein the first part 21 is intended for connecting to the external surface of an outlet nozzle 32 of the electrolysis or hydrolysis cell 2. At least the first part 21 of the outlet tubing 20 is made of a heat shrinkable material. However, according to the invention, also the complete outlet tubing 20 can be made of a heat shrinkable material. Preferably, the second part 22 of the outlet tubing 20 is at least in part corrugated.

According to a preferred aspect of the invention, the first part 21 of the outlet tube 20 has a larger cross section than the second part 22 thereof.

Further preferably, the first part 21 of the outlet tubing 20 is equally bell-shaped, wherein a cross section of the bell increases in an axial direction of the outlet tubing 20 towards an outer end 24 of the outlet tubing 20 directly connecting to the external surface of the outlet nozzle 32 of the electrolysis or hydrolysis cell 2.

Advantageously, in terms of manufacturing, the cross section of the outlet tubing 20 is at least in part circular cylindrical.

Optionally, the outlet tubing 20 further includes a third part 23 adjacent to the second part 22 at the end of the second part 22 which is remote from the first part 21 of the outlet tubing 20, wherein advantageously the third part 23 has a larger cross section than the second part 22. The third part 23 may also have a smaller cross section than the second part 22 depending on the application of the outlet tubing 20. In particular, the third part 23 of the outlet tubing 20 has equally a bell-shaped end which facilitates the connection to a not shown collector pipe of the cell system. In an analogous manner, the third part 13 of the inlet tubing 10 can be bell-shaped.

In an electrolysis or hydrolysis cell 2 having an inlet and outlet nozzle 31, 32, the tubing according to the present invention has the first part of the inlet tubing 10 directly connected to the external surface of the inlet nozzle 31 of the electrolysis or hydrolysis cell 2 and the first part 21 of the outlet tubing 20 directly connected to the external surface of the outlet nozzle 32 of the electrolysis or hydrolysis cell 2. Preferably the inlet and/or the outlet tubing 10, 20, in particular the respective first parts 11, 21 thereof, may be additionally secured to the external surface of the respective inlet and outlet nozzle 31, 32 of the electrolysis or hydrolysis cell 2 by means of a respective flange (not shown), the flange being adapted to exert a force on the respective inlet or the outlet tubing 10, 20 to avoid accidental removal of the inlet or the outlet tubing 10, 20 from the respective outlet nozzle 31, 32 of the electrolysis or hydrolysis cell 2 by mechanical traction in the longitudinal direction of the inlet or the outlet tubing 10, 20 by an operator of the electrolysis or hydrolysis cell 2.

According to a preferred aspect of the invention, the heat shrinkable material of the respective first tubing parts 11, 21 comprises or is polytetrafluoroethylene PTFE. Further, the whole tubing 10, 20 may be made of the heat shrinkable material and the heat shrinkable material comprises or is polytetrafluoroethylene PTFE.

The shrinkage of the material is advantageously set up so as to occur when the operating temperature of the electrolysis or hydrolysis cell 2 is in the range of 90 to 130 degrees Celsius and the shrinking of the heat shrinkable material at the operating temperature is advantageously such that a sealing is formed between the respective first tubing parts 11, 21 and the inlet or the outlet nozzle 31, 32 of the electrolysis or hydrolysis cell 2 without fastening means which is effective for pressures up to a maximum pressure in the range of 500 to 900 mbar.

Generally speaking, the amount of shrinking of the tubing can be controlled by the initial temperature applied to the tubing in the pristine state and once the temperature returns to a lower value than a preset value, which preset value could be for instance within the above operating temperature range, the shrinking of the tubing will stop. The shrinking cannot be reversed with the temperature drop and the sung fit will remain even if temperature of the tubing will be returned to room temperature.

In view of the foregoing, the person skilled in the art will also appreciate that the tightness of the snug fit can be controlled by the initial heating of the pristine tubing to achieve a certain amount of shrinking, such that the tightness of sealing (thus the snug fit) formed between the respective first tubing parts 11, 21 and the inlet or the outlet nozzle 31, 32 is controlled. In this way, by heating the tubing to a temperature, which is higher than the above operating temperature range or higher than a given operating temperature, a better sealing or sung fit is provided which is irreversible with the lowering of the temperature.

The present invention provides also for a method for manufacturing a heat shrinkable tubing part or a whole tubing, the method comprising the following steps preferably in the order indicated below:
providing an extrudable raw material,
extruding the raw material to form the tubing part or the whole tubing,
optionally sintering the extruded tubing part or the whole tubing,
heating the extruded (and optionally sintered) tubing part or whole tubing at or above the gelation temperature thereof,
stretching the heated tubing part or whole tubing, and
cooling down the stretched tubing part or whole tubing.

Also in the above described method the raw material comprises or is exclusively comprised of polytetrafluoroethylene (PTFE).

The stretching step may be carried out by pressure, wherein the pressure is preferably in a range between 5 and 20 bar and more preferably in a range between 5 and 15 bar. Advantageously a blow mold may be used to provide for the above pressures in the stretching step.

The cooling step may be carried out by cooling the tubing part or the whole tubing down to room temperature. The cooling step may be carried out actively by using active cooling means, like blowers or fans, or passively by simply allowing the tube part or whole tube to reach room temperature. The cooling step may be carried out under pressure, in particular at the foregoing pressures, or at a normal atmospheric pressure.

The stretching and cooling steps may be advantageously carried out in a blow mold and the following steps may be carried out:
bringing the heated tubing part or the whole tubing into the blow mold,
closing the blow mold around the tubing part or the whole tubing,
applying a pressure in a range between 5 and 20 bar, preferably in a range between 5 and 15 bar, inside the tubing part or the whole tubing so that the same expands,
cooling the tubing part or the whole tubing down to room temperature under the pressure,
opening the blow mold and releasing the expanded tubing part or the whole tubing.

The heating step may be performed at a temperature in a range between 250 and 400 degrees Celsius, preferably in a range between 300 and 350 degrees Celsius, and more preferably at a temperature of about 330 or about 324 degrees Celsius. As will be appreciated by the person skilled in the art, the temperature range is dependent on the gelation temperature of the tubing material.

The present invention also provides for a method for sealing a connection between an inlet or outlet nozzle 31, 32 of an electrolysis or hydrolysis cell 2 and the tubing 10, 20 as disclosed above, without fastening means and/or the tubing 10, 20 manufactured as above comprising the following steps:
sliding the first part 11, 21 of the tubing 10, 20 on the inlet and/or outlet nozzle 31, 32 of the electrolysis or hydrolysis cell 2,
shrinking the first part 11, 21 of the tubing 10, 20 on the inlet and/or outlet nozzle 31, 32 of the electrolysis or hydrolysis cell 2 so as to form a sealing between the first part 11, 21 of the tubing 10, 20 and the inlet and/or outlet nozzle 31, 32 of the electrolysis or hydrolysis cell 2 at the operating temperature of the electrolysis or hydrolysis cell 2, wherein preferably the operating temperature is in the range of 90 to 130 degrees Celsius and/or wherein the shrinking of the heat shrinkable material at the operating temperature is such that a sealing is formed between the first part 11, 21 of the tubing 10, 20 and the inlet or outlet nozzle 31, 32 of the electrolysis or hydrolysis cell 2 without fastening means which is effective for pressures up to a maximum pressure in the range of 500 to 900 mbar.

The tubing of the present invention fully achieves its objects as the heat shrinkable tubing thereof can be simply pulled over the inlet and/or outlet nozzles of the electrolysis or hydrolysis cells and the seal can be established at the nozzles without additional means like flanges or the like at the operating temperature of the cells. In this way the mounting operation of the tubing is rendered simpler and the same is true for the removal of the tubing.

The disclosure of the present invention includes all modifications and equivalents of the subject matter recited in the claims appended hereto as permitted by applicable law. Moreover, any combination of the above-described elements in all possible variations thereof is encompassed by the disclosure unless indicated otherwise herein.

Where technical features mentioned in any claim are followed by reference signs, the reference signs have been included for the sole purpose of increasing the intelligibility of the claims and accordingly, neither the reference signs nor their absence have any limiting effect on the technical features as described above or on the scope of any claim elements.

One skilled in the art will realize the disclosure may be embodied in other specific forms without departing from the disclosure or essential characteristics thereof. The foregoing embodiments are therefore to be considered illustrative rather than limiting to the disclosure described herein in all respects. The scope of the invention is thus indicated by the appended claims, rather than the foregoing description, and all changes that come within the meaning and range of equivalence of the claims are therefore intended to be embraced therein.

### List of reference signs

- 10: inlet tubing
- 11: first part of inlet tubing
- 12: second part of inlet tubing
- 13: third part of inlet tubing
- 14: outer end of inlet tubing
- 20: outlet tubing
- 21: first part of outlet tubing
- 22: second part of outlet tubing
- 23: third part of outlet tubing
- 24: outer end of outlet tubing
- 30: electrolysis or hydrolysis cell
- 31: inlet nozzle of the electrolysis or hydrolysis cell
- 32: outlet nozzle of the electrolysis or hydrolysis cell

## Claims

1. A tubing (10, 20) for an electrolysis or hydrolysis cell (2), the tubing (10, 20) being designed to be connected to an inlet or an outlet nozzle (31, 32) of the electrolysis or hydrolysis cell (2),
wherein the tubing (10, 20) comprises a first part (11, 21) sized and shaped to be pulled over the external surface of the inlet or outlet nozzle (31, 32) of the electrolysis or hydrolysis cell (2), and
wherein at least the first part (11, 21) of the tubing (10, 20) is made of a heat shrinkable material, the heat shrinkable material having a shrink behavior such that a sealing is formed between the first part (11, 21) of the tubing (10, 20) and the inlet or the outlet nozzle (31, 32) of the electrolysis or hydrolysis cell (2) without fastening means at an operating temperature of the electrolysis or hydrolysis cell (2).

2. The tubing (10, 20) according to claim 1, wherein the heat shrinkable material comprises or is polytetrafluoroethylene (PTFE) and/or wherein the whole tubing (10, 20) is made of the heat shrinkable material.

3. The tubing (10, 20) according to claims 1 or 2, wherein the operating temperature is in the range of 90 to 130 degrees Celsius and/or wherein the shrinking of the heat shrinkable material at the operating temperature is such that a sealing is formed between the first part (11, 21) of the tubing (10, 20) and the inlet or the outlet nozzle (31, 32) of the electrolysis or hydrolysis cell (2) without fastening means which is effective for pressures up to a maximum pressure in the range of 500 to 900 mbar.

4. The tubing (10, 20) according to one or more of the preceding claims, wherein the tubing (10, 20) further comprises a second part (12, 22) adjacent to the first part (11, 21), wherein the first part (11, 21) is intended for connecting to the external surface of the inlet or outlet nozzle (31, 32) of the electrolysis or hydrolysis cell (2), wherein the first part (11, 21) has a larger cross section than the second part (12, 22).

5. The tubing (10, 20) according to one or more of the preceding claims, wherein the first part (11, 21) is bell-shaped, wherein a cross section of the bell increases in an axial direction of the tubing (10, 20) towards an outer end (14, 24) of the tubing (10, 20) directly connecting to the external surface of the inlet or outlet nozzle (31, 32) of the electrolysis or hydrolysis cell (2).

6. The tubing (10, 20) according to one or more of the preceding claims, wherein the cross section of the tubing (10, 20) is at least in part circular cylindrical.

7. The tubing (10, 20) according to one or more of the preceding claims 4 to 6, wherein the second part (12, 22) is at least in part corrugated, wherein preferably the tubing (10, 20) further includes a third part (13, 23) adjacent to the second part (12, 22) at the end of the second part (12, 22) which is remote from the first part (11, 21), wherein the third part (13, 23) has a larger cross section than the second part (12, 22).

8. The tubing (10, 20) of one or more of the preceding claims in combination with an electrolysis or hydrolysis cell (2) having an inlet and outlet nozzle (31, 32), wherein the tubing (10, 20) includes the inlet tubing (10) connected at the first part (11) thereof to the external surface of an inlet nozzle (31) of the electrolysis or hydrolysis cell (2) and the tubing (10, 20) includes the outlet tubing (20) connected at the first part (21) thereof to the external surface of an inlet nozzle (32) of the electrolysis or hydrolysis cell (2), wherein preferably the inlet and/or the outlet tubing (10, 20) is secured to the external surface of the respective inlet and outlet nozzle (31, 32) of the electrolysis or hydrolysis cell (2) the by means of a respective flange, the flange being adapted to exert a force on the respective inlet or the outlet tubing (10, 20) to avoid accidental removal of the inlet or the outlet tubing (10, 20) from the respective outlet nozzle (31, 32) of the electrolysis or hydrolysis cell (2) by mechanical traction in the longitudinal direction of the inlet or the outlet tubing (10, 20) by an operator of the electrolysis or hydrolysis cell (2).

9. A method for manufacturing a heat shrinkable tubing part or a whole tubing, preferably the first tubing part or the whole tubing according to one or more of claims 1 to 8, the method comprising:
providing an extrudable raw material,
extruding the raw material to form the tubing part or the whole tubing,
heating the extruded tubing part or whole tubing at or above the gelation temperature thereof,
stretching the heated tubing part or whole tubing, and
cooling down the stretched tubing part or whole tubing.

10. The method according to claim 9, wherein the raw material comprises or is comprised of polytetrafluoroethylene (PTFE).

11. The method according to claims 9 or 10, wherein the stretching step is carried by pressure, preferably by blow molding, wherein the pressure is preferably in a range between 5 and 20 bar and more preferably in a range between 5 and 15 bar.

12. The method according to claims 9 or 10, wherein the stretching and colling steps are carried out in a blow mold and comprises the following steps:
bringing the heated tubing part or the whole tubing into the blow mold,
closing the blow mold around the tubing part or the whole tubing,
applying a pressure in a range between 5 and 20 bar, preferably in a range between 5 and 15 bar, inside the tubing part or the whole tubing so that the same expands,
cooling the tubing part or the whole tubing down to room temperature under the pressure,
opening the blow mold and releasing the expanded tubing part or the whole tubing.

13. The method according to one or more of claims 9 to 12, wherein the heating step is performed at a temperature in a range between 250 and 400 degrees Celsius, preferably in a range between 300 and 350 degrees Celsius, and more preferably at a temperature of about 330 or about 324 degrees Celsius.

14. The method according to one or more of claims 9 to 13, wherein the step of cooling is carried out such that the tubing part or the whole tubing reaches room temperature and/or further comprising an a sintering step following the extrusions step and prior to the heating step.

15. A method for sealing a connection between an inlet or outlet nozzle (31, 32) of an electrolysis or hydrolysis cell (2) and a tubing (10, 20) according to one or more of claims 1 to 8 without fastening means and/or manufactured according to one or more of claims 9 to 14 including the following steps:
sliding the first part (11, 21) of the tubing (10, 20) on the inlet and/or outlet nozzle (31, 32) of the electrolysis or hydrolysis cell (2),
shrinking the first part (11, 21) of the tubing (10, 20) on the inlet and/or outlet nozzle (31, 32) of the electrolysis or hydrolysis cell (2) so as to form a sealing between the first part (11, 21) of the tubing (10, 20) and the inlet and/or outlet nozzle (31, 32) of the electrolysis or hydrolysis cell (2) at the operating temperature of the electrolysis or hydrolysis cell (2), wherein preferably the operating temperature is in the range of 90 to 130 degrees Celsius and/or wherein the shrinking of the heat shrinkable material at the operating temperature is such that a sealing is formed between the first part (11, 21) of the tubing (10, 20) and the inlet or outlet nozzle (31, 32) of the electrolysis or hydrolysis cell (2) without fastening means which is effective for pressures up to a maximum pressure in the range of 500 to 900 mbar.
